# EUROPEAN PATENT APPLICATION

(11) **EP 1 369 806 A1**
(43) Date of publication of application: **10.12.2003**
(21) Application number: 03291336.0
(22) Date of filing: 04.06.2003
(51) Int. Cl.: G06F 17/60

(54) **Enhanced interface for communicating with a handled trading system**

(30) Priority: 05.06.2002 US 163851
(71) Applicant: Goldman, Sachs & Co., New York, NY 10004 (US)
(72) Inventor: Eisenthal, Joshua, Norwood, Ma 02062-2033 (US); Silverman, Andrew, Holmdel, NJ 07733 (US); Pae, Steven, Staten Island, NY 10314 (US)
(74) Representative: Cabinet Hirsch Groupement 161

(57) **Abstract**

This application is related to a method and system for communicating with a handheld trading interface and, more particularly, to an enhanced interface for communicating with floor traders operating in a financial exchange. The application interface provides user access to functionality permitting them to request, receive, and review current and historical look information from brokers on a trading floor. The application further allows a user to send and receive messages to and from a broker and to review the messages in a manner similar to looks from the broker.

## Description

### COPYRIGHT STATEMENT:

This document contains material which is subject to copyright protection. The applicant has no objection to the reproduction of this patent document, as it appears in the U.S. Patent and Trademark Office patent file or records or in any publication by the U.S. Patent and Trademark Office or counterpart foreign or international instrumentalities. All remaining copyright rights whatsoever are otherwise reserved.

### CROSS REFERENCE TO RELATED APPLICATIONS:

This application claims priority under 35 U.S.C. § 119 to U.S. Provisional Patent Application Serial No. 60/296,325 filed on June 5, 2001.

This application is a continuation-in-part of co-pending U.S. Patent Application Serial No. 09/413,150 filed on October 6, 1999.

This application is also related to U.S. Patent Application 09/413,270 filed on October 6, 1999, entitled "Order Centric Tracking System," the entire contents of which are expressly incorporated by reference.

### FIELD OF THE INVENTION:

This application is related to a method and system for communicating with a handheld trading interface and, more particularly, to an enhanced interface for communicating with floor traders operating in a financial exchange.

### BACKGROUND:

There exist several types of financial markets in which securities, commodities, and other negotiable instruments are traded. An auction market, such as a stock exchange, is one such financial market. In an auction market, buyers and sellers congregate on the exchange floor and announce their respective bid (offer to buy) and ask (price acceptable to sell) prices. A trade in any particular security will occur at no more than the highest price a buyer is willing to pay and at no less than the lowest price a seller is willing to accept.

Among the players on the floor of an exchange are specialist and floor brokers. Specialists call out the best bid and ask prices received from the various brokers, ensure that trades are posted, facilitate trades, and act to ensure liquidity. Floor brokers roam the trading floor and act as an agent to transact orders on behalf of buyers and sellers.

A typical transaction originates when an order is placed with an off-the-floor-trading desk (e.g., a "trading booth") to buy or sell a particular security. The trading desk conveys the order to an exchange clerk who notes the parameters of the order including whether the order is a buy or sell order, the symbol of the security, the quantity, the price, any special conditions associated with the order, and the time that the order is placed. The clerk then delivers the order to the floor broker for execution. Traditionally, the orders were transcribed onto paper order slips which were then delivered to the floor brokers by pages or runners. After the floor broker executes the order, the executed order is noted on a slip of paper that is returned to the clerk by a runner.

A number of problems exist with the use of runners to deliver trade orders, confirmations, and other information. These problems can include trade execution delays resulting from illegibly transcribed orders, dropped slips, or delayed delivery. Other problems include an inability to easily maintain a clear audit trail.

In addition to buy and sell orders, investors may request a "look" from the floor of the exchange. In response to a "look" request, a broker notes his or her observations with respect to what is happening in the market for a particular security. The look information noted by the broker may vary depending on the particular broker and what he or she has observed. Information in a look can include, for example, recent buyer and seller identities, trade sizes and prices, an appraisal of market interest, the trader's opinion, and any other information that the trader can or may wish to provide.

Look requests can originate from within a financial institution or be requested by clients of the institution. Historically, when an investor wanted a floor look, the investor would call their broker representative to make the request. The representative would pass the request to the trading desk, which would then pass the request to a clerk at the appropriate booth at the exchange. The clerk would hand off the request to the floor broker responsible for the security at issue. The floor broker, in response, would write their observations on a slip of paper and pass it back to the clerk. The information in the look is then returned, in turn, from the clerk to the trader, to the broker representative, and then to the requesting investor. This sequence can be both cumbersome and inefficient.

To address these and other problems, auction markets, trading institutions, and the like, have explored ways in which to use electronic and computer communication techniques. With respect to looks, for example, a first improvement involved the use of electronic image scanners installed on the trading floor. After a floor broker had written a look onto paper, the look was scanned and the image sent electronically to the clerk. The electronic image could then be easily sent to the requestor as well as other appropriate investors. Appropriate software was provided at the receiving computers to allow the images of the look to be viewed and/or printed.

More recently, financial institutions, such as Goldman Sachs & Co., have introduced handheld trading computers which are connected to a data network via an wireless link and can be used by a broker to exchange trading orders and information with an off-floor server over a wireless computer network. A trading system of this type is described in detail in the related applications to this application noted above.

In the described system, the handheld trading computer can be configured with an interface modeled on traditional paper-based trading forms. The interface can represent data using graphically rendered "pages" that can display and receive figures, drawings, symbols, and arbitrary marks. The "pages" typically include input areas in which a user can write using "digital ink." Digital ink writings may be bit-mapped images containing arbitrary annotations, drawings, and other marks formed using an input stylus and are closely analogous to hand-written pages. Pages may also contain graphically rendered objects that a user can interact with using a stylus.

The handheld trading system allows floor brokers to form an electronic ticker page containing trade order information for a negotiable item (such as a stock or other equity) and communicate that information to a trading computer. The system also allows a floor broker to receive requests for looks, to write the look observations directly on a graphical display screen, and to transmit the look image to the network. Electronic mail functionality can also be provided.

Various software and hardware systems have been provided to allow those who are located off of the trading floor to communicate with a floor broker through their handheld trading system. A particular system is the Floor Pictures application provided by Goldman Sachs & Co. This system allows individuals situated away from a trading floor to have electronic access to live market information as if they were standing in the "crowd" on the exchange floor. Although present systems allow data and messages to be passed back and forth, various aspects of the system can be improved. For example, historical data is only available through use a separate application.

Accordingly, it is an object of the present invention to provide an improved interface for communicating with a handheld trading system.

### SUMMARY

The present invention is related to aspects of a user interface which is used to communication with and received information from brokers on an exchange floor. The brokers will generally use wireless handheld computers to interact with a trading system and send looks and messages. However, other mechanisms can be used to receive information from the floor brokers.

A user application is provided to allow individuals situated away from the trading floor to request looks for a particular security and to receive a current look from the floor broker. In particular, the application allows a user to subscribe to receive looks for a first security from a broker on the trading floor. As pages of look information for that security are received, the user can view both read and unread looks for the first security in sequential order from within the application. According to a particular aspect of the invention, a user is able to access historic looks for at least the same trading day from within the same application that they can request current looks and receive those looks. In a particular embodiment, the application restricts the viewing of previously unviewed looks to a sequential order starting from an oldest unread look.

The application also allows a user to send messages to and receive messages from selected brokers. Advantageously, the messages received from the floor brokers are provided in the same format as the looks received from the brokers. The application allows a user to retrieve and review broker messages in generally the same way as they can review received looks.

Embodiments of the invention include computer executable program code residing on a computer-readable medium, a computer data signal embodied in a digital data stream, or a method of interacting with a computer or other network access device designed to assist a user in requesting and receiving information from floor brokers. Various features and embodiments are further described in the following figures, drawings and claims.

### BRIEF DESCRIPTION OF THE DRAWINGS:

The details of the invention will be further appreciated with reference to the following figures in which:
Fig. 1 is a high-level diagram of a electronic trading system for use in the present invention;
Fig. 2 shows a sample interface screen for a handheld trading computer;
Fig. 3 shows a sample looks page as it appears on a particular implementation of the handheld trading computer;
Fig. 4 shows a sample messaging page for a particular implementation of the handheld trading computer;
Figs. 5a and 5b show screen displays for an application interface for communicating with a handheld trading computer;
Fig. 6 shows a subscription list access screen for the application of Figs 5a, b;
Figs. 7-10 show various aspects of the application interface related to requesting and retrieving looks from a floor broker; and
Figs. 11 and 12 show aspects of the application interface related to sending and receiving messages to and from a floor broker.

### DETAILED DESCRIPTION OF THE PREFERRED EMBODIMENT(S):

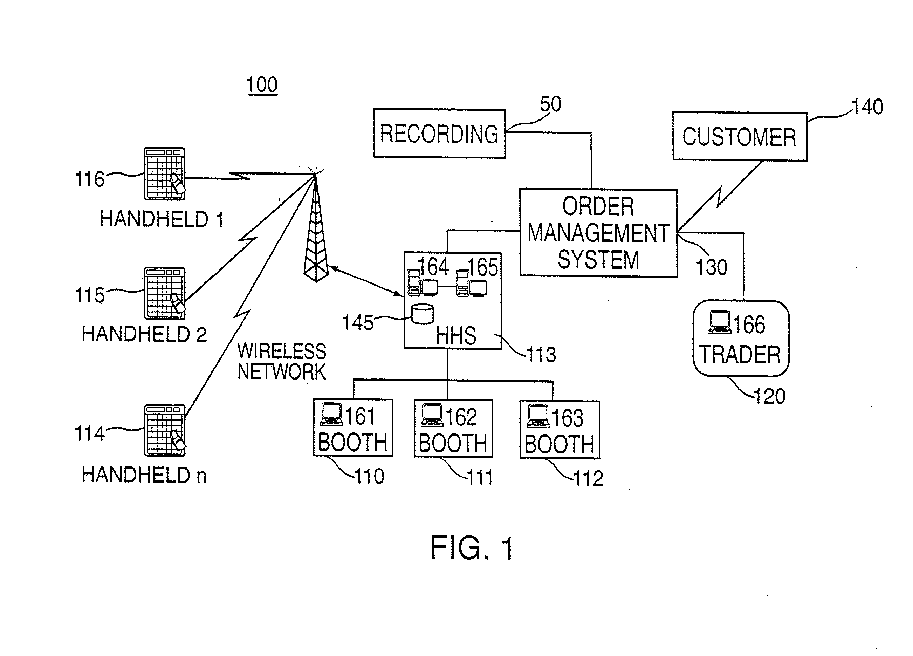

Turning to Fig. 1, there is shown a high-level diagram of a networked computer system 100 for use in tracking orders and in distributing information to and from floor brokers via use if wireless handheld computing devices. In a general operation, a trader 120 can initiate an order to be executed on the floor of an exchange. The order is entered into an online management system 130. The online management system 130 can transmit the order to a Handheld Server (HHS) 113 and to a computerized booth station 161-162. The HHS 113 can transmit the order to a handheld computing device 114-116.

A wireless network connects the computerized Handheld Server (HHS) 113 and handheld computing devices 114-116. The system can also include computerized booth stations 161-163, computerized trader stations 166, computerized recording stations 150, computerized customer stations 140 and a computerized online management system 130. Each of the computerized devices 114-116 130 140 150 161-166 can include a processor, memory, a user input device, such as a keyboard and/or mouse, and a user output device, such as a video display and/or printer.

The computerized devices 114-116 130 140 150 161-166 can communicate with each other to exchange data. Interactions with the Handheld server 150 and the online management system 130 can proceed as if each was a single entity in the network 100. However, the HHS 113 and the online management system 130 may include multiple processing and database subsystems, such as cooperative or redundant processing and/or database servers 164-165, that can be geographically dispersed throughout the network 100. A local server 164-165 may be a proxy server or a caching server. The HHS 113 may also include one or more databases 145 storing order related information. A wired networked or direct connection will typically be provided to connect the booths 161-163 with the HHS and the trader 166 with the order management system 130. A dial-up or other connection can be provided to allow customer 140 to access the system. Other network connections also can be provided. For example, customer 140 and other system users can be connected via a wide area network or a distributed network, such as the Internet (not shown). A handheld computing device 114-116 used on an exchange floor can be capable of TCP/IP communication over a wireless network 119. The wireless network is typically supported by the trading exchange. However, the handheld computing devices 114-116 can also establish a direct TCP/IP socket connection to a handheld server 113 and not be required to use exchange middleware wireless networks 119. Other wireless communication links can also be used.

A trader, customer or other person with access to the Order Management System 130 initiates a trade by entering an order 210 into a network access device. The Order Management System 130 logs the order and allocates it to a broker ID and a booth in accordance with the security at issue. The order is then transmitted to the handheld server 213 and thereby to an appropriate booth station 212 and the handheld computing device 114-116 onto which a Broker ID associated with the security symbol is logged. The broker enter executions according to orders received into their handheld computing device and information relating to the orders is transmitted to an online management system for exchange-listed securities.

The system 100 can record, in a history log, a number of significant events that occur relating to an order. The history log can be stored in an electronic storage medium such as a magnetic disc drive or a compact disc (CD). The log can provide a means whereby a broker can review information during the trading day. Tasks can be presented to a user in a manner that will give the user a quick view of what actions have been performed relating to an order or a group of orders. As will be appreciated, the historical data can also be stored in remotely located databases. The historic data can be accessed using various mechanisms by the floor traders or others.

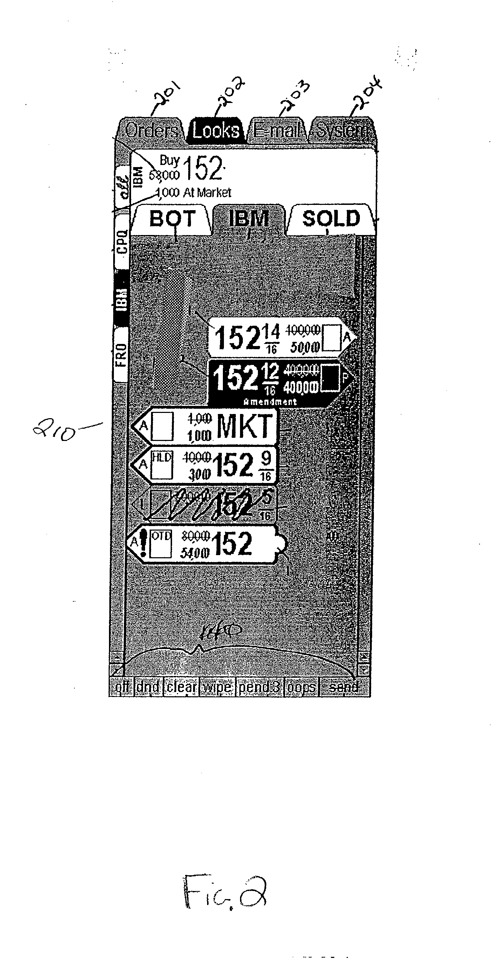

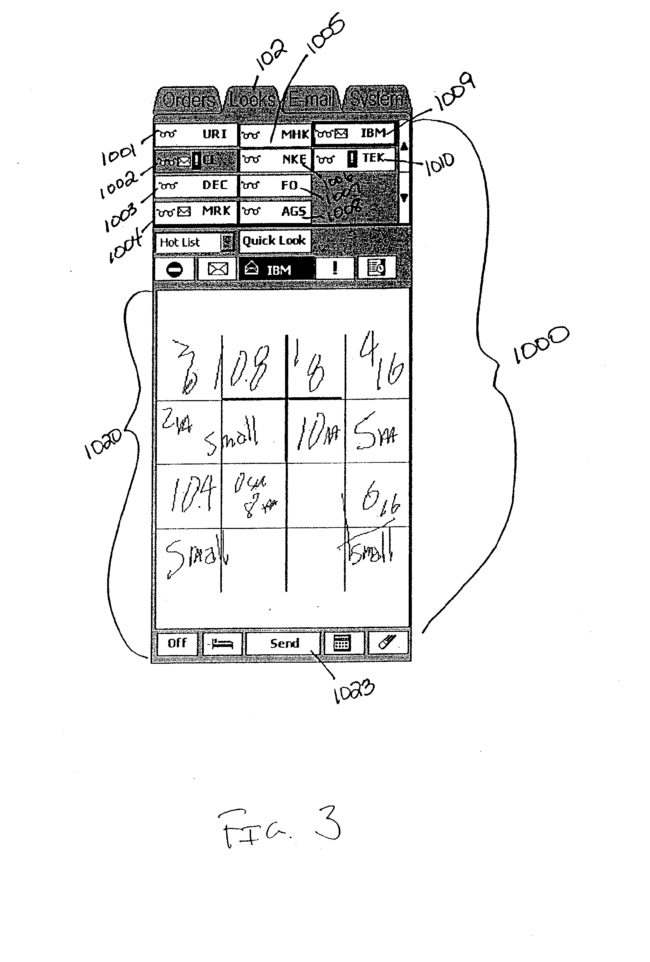

The handheld trading computer can be organized around a series of command pages. A sample screen is shown in Fig. 2 and includes four command pages: an "orders" page, a "looks" page, an "E-mail" page, and a "system" page. The orders page can be used to access functions that display and execute buy and sell transactions. The looks page can be used to access functions that exchange "looks" requests and replies with off-floor brokers, the "E-Mail" page can be used to access messaging functions, and the "system" page can be used for other functions and handheld trading computer configuration.

A broker can select either the orders, looks, e-mail, or systems page by tapping on a corresponding page tab 201-204. The screen shown in Fig. 2 is a main "orders" page 210 that is displayed when the orders tab is tapped. This page contains one or more ticker pages that display buy and sell order information that has been sent over a wireless network connecting the handheld trading computer to another computer or computers (trading server computers) which may be operated by off-floor traders or clerks. A broker may interact with information displayed on a ticker page to transact trades for the instrument associated with the ticker page, as well as to display data about that instrument.

In addition to trades, brokers may also be asked to process look requests. A look request is sent to the handheld trading computer from a trading server when an off-floor trader, clerk, or other individual wants to get a feel for the current trading activity associated with a particular item being traded. When a look request is received, the visual appearance of the looks tab 202 can be altered, such as by darkening it as shown in Fig. 2, to indicate this condition. The broker can tap on a looks page tab 202 to display the main "looks" page on which look request are displayed and processed.

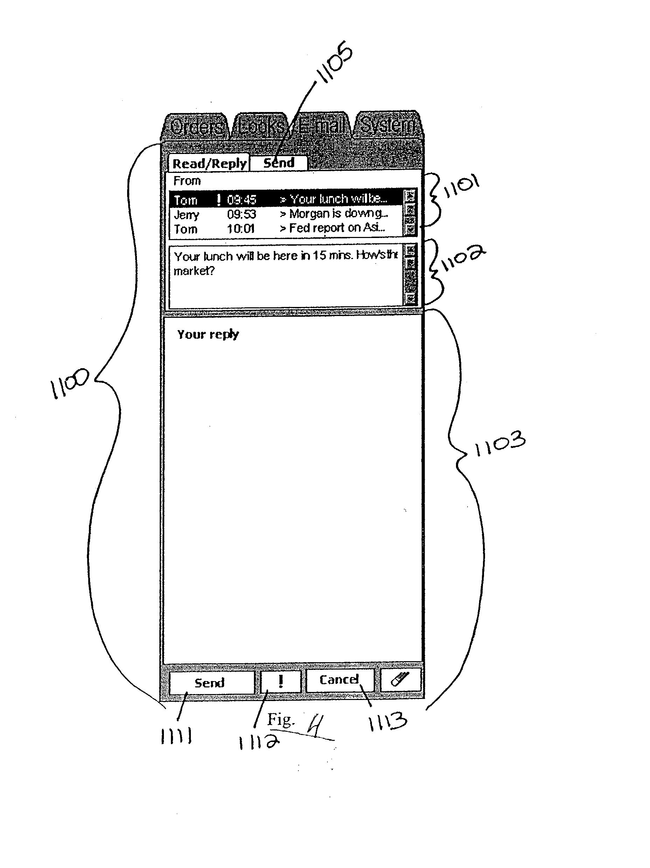

Fig. 3 shows a sample looks page 1000 as it appears on a particular implementation of the handheld system. Look request are displayed as a series of look objects 1001-1010. Each of the looks objects identifies a ticker symbol for which pricing information is being requested. To enter look information, the broker selects a look object 1001-1010, e.g., by tapping on it, and then writes in the digital ink area 1020. A background grid can be shown in the digital ink area on which the information can be written. A bit mapped image of the digital ink area 1020 may be returned to the trading server when the broker taps on the send button 1023. The image is then distributed to the appropriate parties.

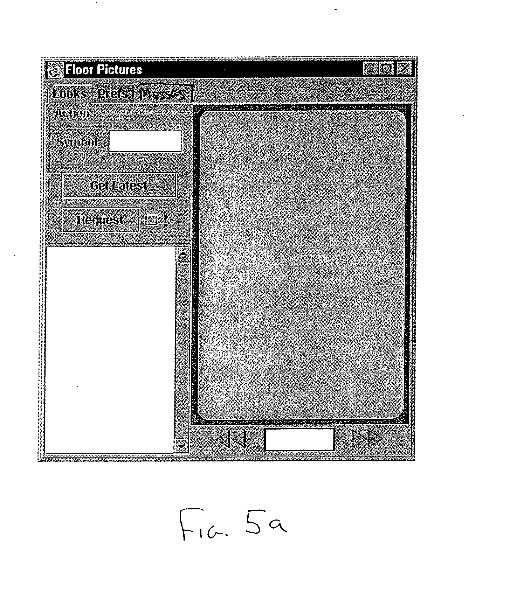

Preferably, the handheld trading computer also provides additional data and messaging services to the broker. For example, an e-mail page 1100 can be used to provide an interface to an electronic mail system. A sample e-mai1 page 1100 is shown in Fig. 4.

As with other pages, a broker can access the e-mail page by tapping the appropriate tab. E-mail messages received at the handheld trading computer can be listed in message header area 1101. The broker can tap on listed message in area 1101 and the text of the message will display in the message text area 1102. Responses may be composed in digital ink area 1103 and sent by tapping on the send button 1111. A broker can also tap on the send tab 1105 to originate a message. Messages may be canceled by tapping on button 1113 and marked high priority by tapping on button 1112.

In some implementations, digital ink messages can be converted to characters using handwriting recognition software. For example, an e-mail message may be "written" in digital ink area 1103 and converted to text characters prior to being transmitted from the handheld trading computer. A keyboard can also be displayed, thus allowing a broker to enter data by tapping letters.

The "opposite" side of the trading system is the computer interface that is used by traders, customers, and others who are not on the trading floor and who communicate with the floor brokers. The basic function of this application is to allow individuals situated away from the floor of an exchange, such as the New York Stock Exchange, to have electronic access to live market information that is available to parties on the exchange floor. Brokers can send this live data to all interested and/or authorized parties via portable wireless hand-held computers, such as discussed above.

The application can be executed on a conventional computer terminal with a data connection to the trading system, such as a dedicated network connection or a connection through, e.g., the Internet and therein to a suitable Internet-accessible gateway supported by the financial institution. Preferably, the application is written in Java or another programming language that enables the application to be easily distributed and installed on a wide variety of system platforms so that a remote user can more easily have available functionally similar to that which was previously available only to traders on the floor of an exchange.

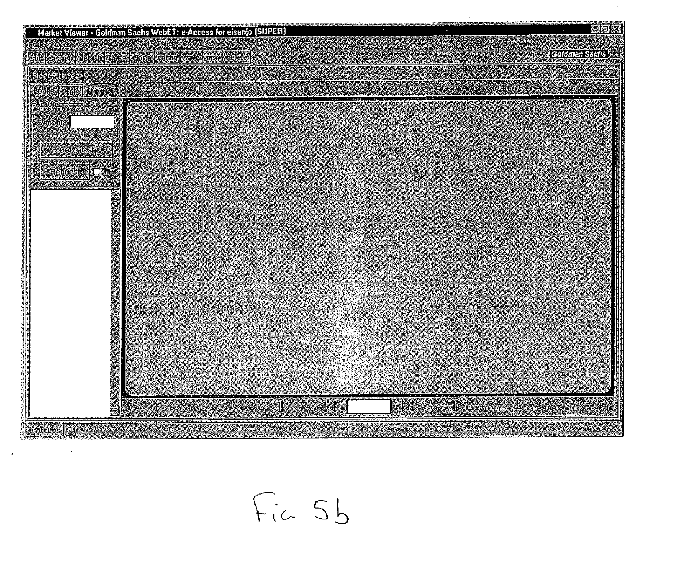

The application can be written as a stand-alone application or provided as a tab or applet that executes from within a web browser, such as the Microsoft internet Explorer. Fig. 5a, there is shown an initial appearance of the application window in a stand-alone embodiment. Fig. 5b shows the application window running from within a larger market-viewer software application an accessible via an appropriate tab, such the "Floor Pictures" tab shown in the figure. The particular programming techniques needed to implement the application functionality are known to those of ordinary skill in the art.

The application is preferably configured so that each user has the ability to maintain their own list of subscribed stock symbols. As floor looks for a given security symbol are sent from the exchange floor, e.g., by a broker using their handheld system, they are transmitted to all users that have subscribed to that symbol. As a result, a user will receive floor looks that they have requested as well as all other looks for that symbol, whether requested by other clients, by the financial institution itself, or are provided by the floor broker at their own initiative. In addition, clients who have requested a transaction for a given security can be sent looks for that security over the course of the trading day, even if they have not expressly subscribed to that symbol.

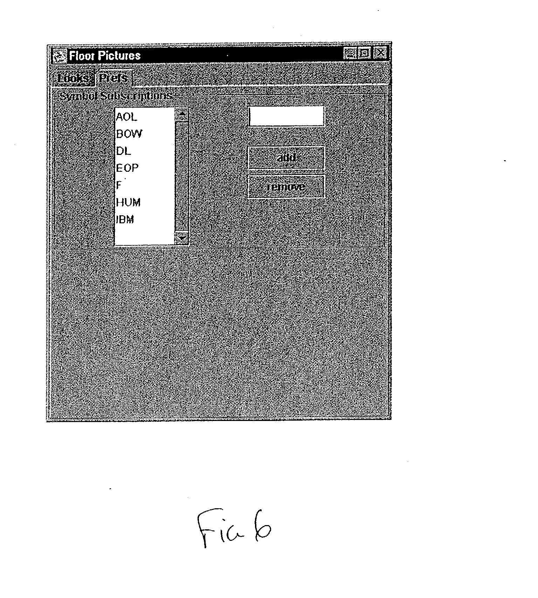

Fig. 6 shows a preferable user interface through which a user can interactively view the subscription list as well as add to and remove symbols from it. In a particular embodiment, subscriptions are accessible through a "preferences" tab. A user can add symbols to the subscription list by typing one or more ticker symbols (with appropriate delimiters, such as commas or spaces) into the text field and press the enter key or click the add button. To remove a symbol from the subscription list, the user can similarly type one or more ticker symbols into the text field and then click on the "remove" button. In a particular implementation, the user can also select symbols for removal by selecting them directly from the displayed (scrollable) list. The selected symbols will automatically be added to the text field, after which the user can click on the "remove" button. Also, note that when viewing the preferences tab, if a new look is received (via subscription or look request), the appearance of the "Looks" tab can be altered, such as by changing the color to red, until the user returns to that tab.

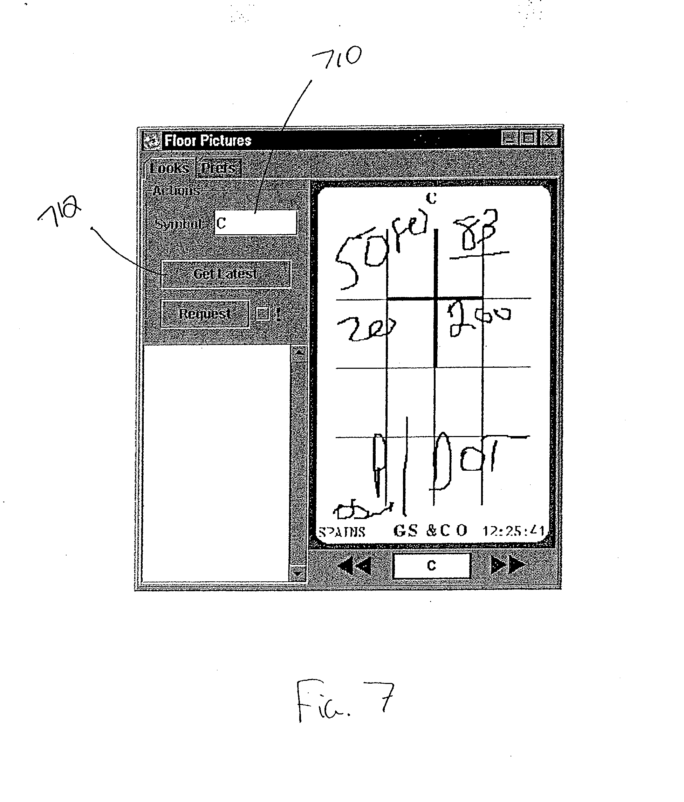

Fig. 7 shows a look that has been retrieved by a user. To retrieve the most recent floor look for a given symbol, the user can type the symbol into the "Symbol" text field 710 and click on the "Get Latest" button 712 (or simply hit the enter key). Fig. 7 shows a look that has been retrieved for the symbol "C." Preferably, only looks for the current trading day can be retrieved. If no look are available, a message to that effect can be displayed in the look image area.

If the user is subscribed to the symbol, the look may be available in a local cache. Otherwise, the look can be retrieved by submitting an appropriate request to the financial service provider's server which will then retrieve the look from a database. Alternatively, the database can be made available to clients, e.g., through an Internet interface, and the appropriate database query can be directly generated by the application.

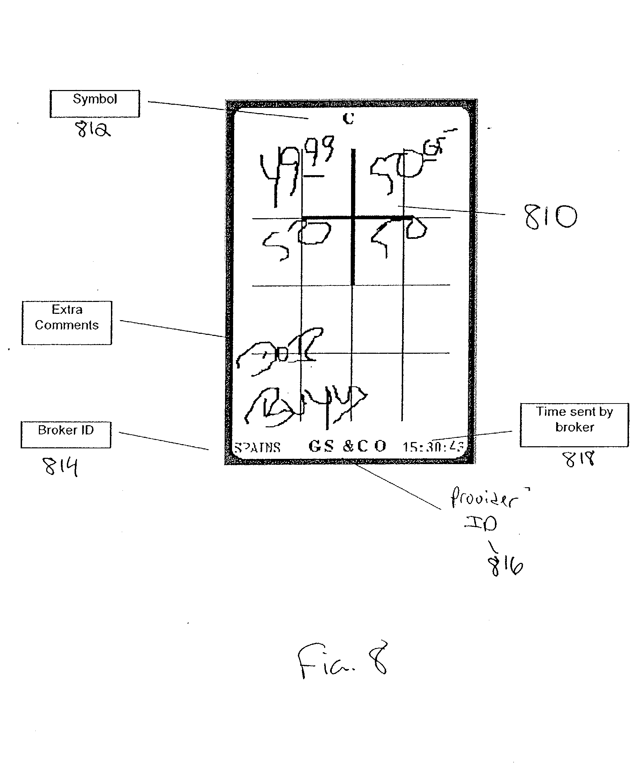

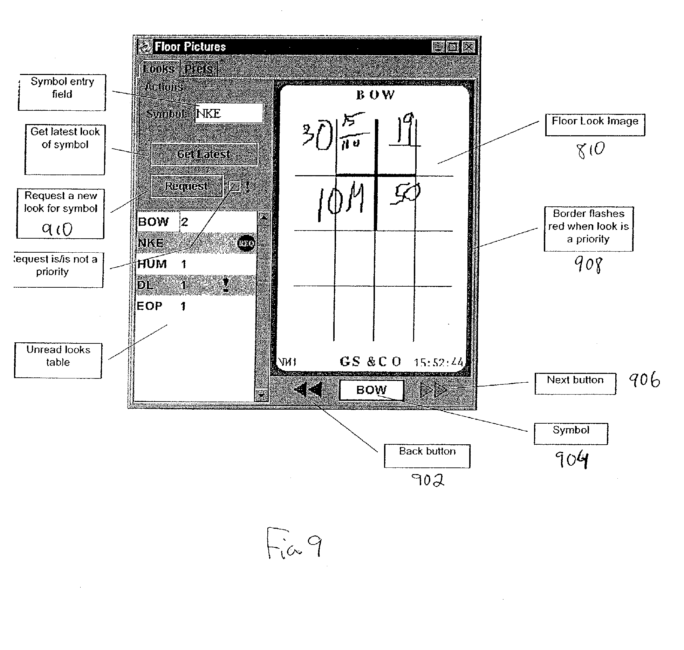

Figs. 8 and 9 show a preferred format for the floor look display. In this configuration, the floor look display contains 5 components:
1. The floor image itself 810. This is the graphical image that contains the information hand-written by the broker regarding the current condition of the given stock 811. Superimposed on this image is a text representation of the security symbol 812 as well as the name (or ID) for the broker who provided the look 814, the name of the financial service provider 816, and a time stamp 818 indicating when the look was sent by the broker.
2. Previous Look Button 902: In a preferred embodiment, the system will automatically retrieve or make available all prior looks for the symbol of interest for at least the current trading day. If an earlier look for this symbol is available, this button is enabled; otherwise, it is disabled.
3. Symbol Label 904: A clear label indicating the viewed symbol.
4. Next Look Button 906: If, when the currently displayed look was retrieved, a later look for that security is available, the next look button is enabled; otherwise it is disabled. Note that when displaying the most recent look, this button will be by definition disabled. Preferably, the button will remain disabled even if a subsequent look for the security is received so that the user will not confuse the "most recent" look they initially started viewing with the more recently received look. Most preferably, only by going back with the previous look button and then forward with the next button will this button become enabled for this look.
5. Floor Image Border 908: The border of the look can be changed to indicate whether the look has been given priority status by the sending broker. Preferably, normal looks have a dark border while the border of priority looks flashes red.

For convenience, two additional buttons can also be provided to retrieve the oldest look available for the current session and the most recent look available (equivalent to clicking the "Get Latest" button). Advantageously, by allowing at least limited direct access to historical look data (as stored, e.g., in a suitable database), the application user will not need to exit or swap out of the present application in order to execute a dedicated historical data application which is better suited for accessing and utilizing historical data that extends over a relatively long period of time and is not optimized for use in retrieving and processing looks over a limited historic period, such as the current trading day.

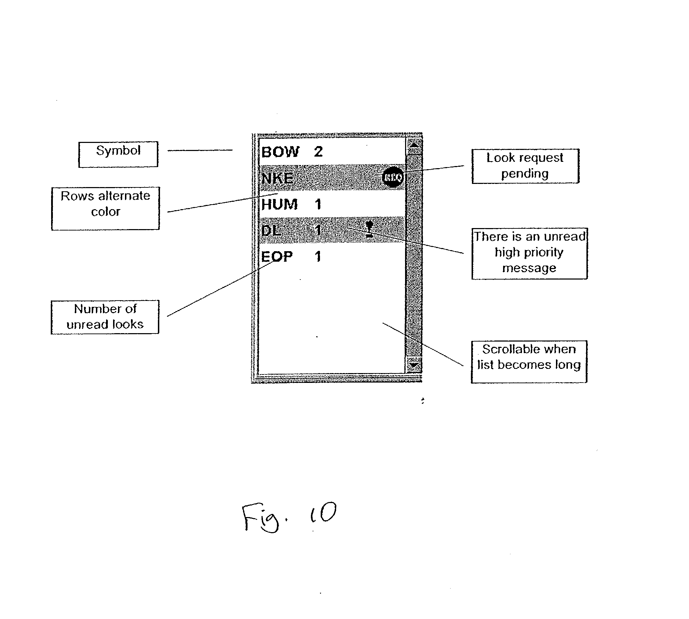

As noted above, a user will automatically receive floor looks sent by the broker (regardless of who if anyone requested them) for a subscribed symbol or for a requested symbol. When a floor look is received, the user can be alerted via an update to the Unread Looks Table. A sample unread floor look table is shown in Fig. 10. In the preferred implementation, If a row for the given symbol does not exist, one is created and added to the end of the list. User options can be provide to allow the list to be sorted according to specified or user defined criteria. As looks are received for a given security, a number indicating the number of unread looks will increment. As looks are read, the unread look count is decreased. Preferably, when count reaches zero, the corresponding row is removed from the list. Additionally, if any of the unread looks for a particular symbol were sent as priorities, visual signal, such as a red exclamation point, can be shown in the table row. As soon as all unread priority looks have been displayed, the signal will disappear.

To view received looks for a given security, the corresponding row in the table can be selected, e.g., by double-clicking. The user can then view the looks for the security. According to a most preferred implementation, the user is only allowed to view the looks in a first-in-first-out order such that the oldest unread look must be read first and the user cannot read the most recent unread look without first stepping through any intermediate looks. This methodology ensures that a user cannot accidentally miss an intermediate unread look. (If a user subscribes to a security and receives a number of prior looks for the trading day as well as a most recent look, they will be permitted to being viewing at the subscription time even though they will not have viewed the looks prior to that time.)

If there are no floor looks available for a given symbol that are recent enough, the user can request that the broker make a new floor look. This is achieved by typing the stock's symbol, in the "Symbol" field and then clicking the "Request" button 910. The request is forwarded to the financial services provider and a message is routed to the broker handling the identified security that a new look has been requested.

To indicate that there is a pending look request, a row is added or updated in the Unread Looks Table for that symbol and a pending look indicator, such as a blue "REQ" ball, is displayed. When a look is next received for that symbol, indicator is removed and the unread count number increments by one.

The interface shown in Fig. 9 is a most preferred form for the application display window for retrieving, requesting, and viewing looks and containing the various interfaces discussed above. As will be appreciated, the layout of these functional elements in the window can be varied. Preferably, however, the layout is constructed such that all of the major looks interfaces shown in the figure are visible simultaneously.

In a preferred implementation, messaging functionality is also included in the look viewing application and can be accessed via a corresponding "Messages" tab. The messages function allows a user to send messages directly to the handheld device onto which a floor broker with a specific ID is logged.

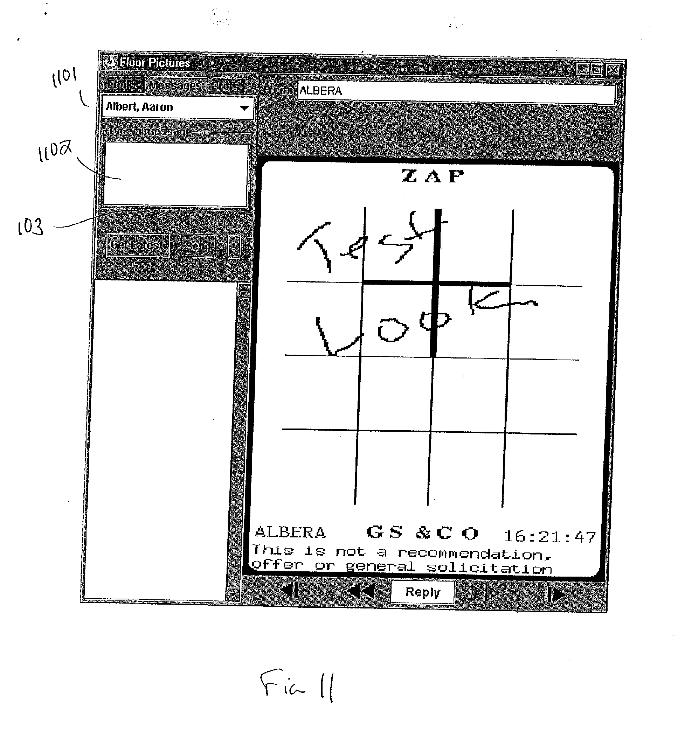

An example messaging screen is shown in Fig. 11. The screen provides the user with a pull-down menu 1101 from which broker IDs can be selected. Preferably, only those brokers which are currently logged in to a handheld trading device are selectable. For example, only logged in brokers may be shown in the list. According to a further function, the floor brokers can be provided with a "do not disturb" setting that can be selected using their handheld device. In this state, even though the broker remains logged in, at least select users, such as outside clients, will be prevented from sending a message. In this state, the broker's ID can be shown in the pull-down list but grayed out or otherwise shown in a way that indicates to a user that they are not currently eligible to receive e-mail.

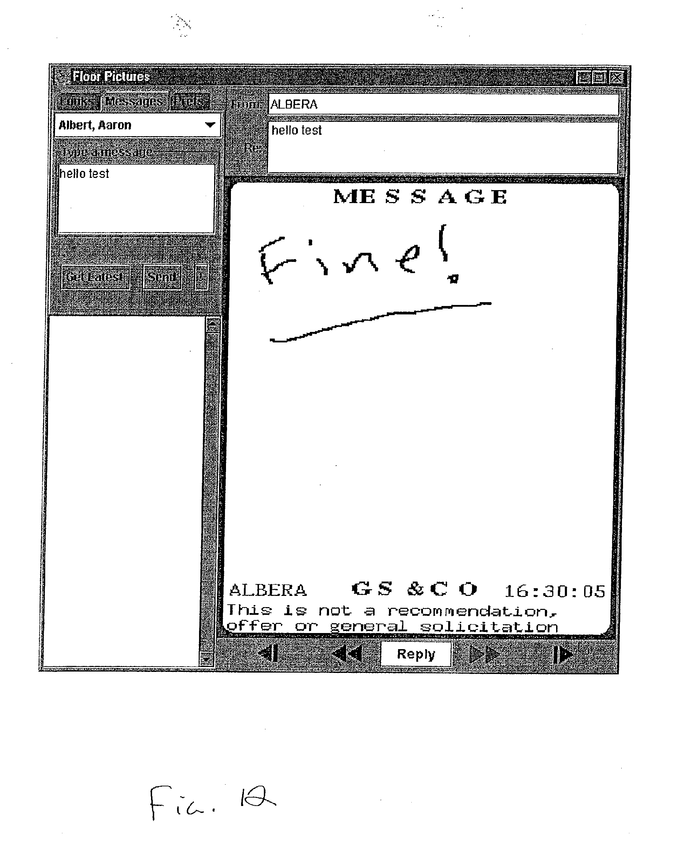

To send a message, after the user selects the broker ID, the message is typed into the message box 1102 and a "send" button 1103 is pressed. The message will then be sent to the designated broker and can be retrieved via a suitable interface, such as that shown in Fig. 4. When responding to the message, the broker can "write" their response in the electronic ink area and the graphical message data will be returned to the user. A sample message and response is shown in Fig. 12.

With reference to Fig. 12, and according to a particular implementation, the messages sent by the floor brokers are treated and stored in a manner which is essentially identical to that for looks. Advantageously, this allows the look functionality to be easily leveraged for use in the messaging aspect of the application. Thus, as shown in Fig. 12, the "messages" tab of the application can allow access to similar functionality, such as "get latest", an unread messages screen, and navigation buttons to allow the previous, next, earliest, and most recent messages from a designated broker to be viewed.

Particular configurations for implementing various aspects of the invention have been discussed above. However, these should be considered as examples and various changes in form and scope can be made without departing from the spirit and scope of the invention.

## Claims

1. A computer-implemented method for providing trading floor information to a user located off of the trading floor, the method comprising the steps of:
subscribing the user to receive looks for a first security from a broker on the trading floor, the user subscription being entered via an application interface;
receiving a plurality of pages of look information for the first security, each page having a respective timestamp indicating a time the look information was transmitted by the broker; and
allowing the user to view both read and unread looks for the first security in sequential order from within the application.

2. The method of claim 1, wherein previously unviewed looks can be viewed only in timestamp order starting from an oldest unread look.

3. The method of claim 1, further comprising the steps of, in the application:
selecting a broker from a list of brokers logged into a trading floor communication system;
sending a message from the user to the broker; and
receiving a reply from the broker;
wherein received looks and the reply are stored in the same data format.

4. The method of claim 3, further comprising the step of allowing the user to view both read and unread messages from the broker in sequential order from within the application.

5. The method of claim 3, wherein the user is prevented from sending messages to brokers logged into the trading floor communication system and who have selected a do-not-disturb mode of operation.

6. The method of claim 1, further comprising the steps of:
requesting a most recent look for a second security during a trading day;
receiving a page of current look information for the second security;
allowing the user to view from within the application both the received current look information for the second security and prior looks for the second security issued during the same trading day.

7. A computerized system for providing trading floor information to a user located off of the trading floor, the system comprising:
a computer system connected to a financial service provider via a network access device; and
executable software stored on the computer system, the software operative with the computer system to cause the system to:
receive user requests to subscribe to looks for a first security from a broker on the trading floor, the user subscription application being entered via an application interface;
transmit the subscription request to the financial service provider;
in response to the receipt of a plurality of pages of look information for the first security, each page having a respective timestamp indicating a time the look information was transmitted by the broker, allowing the user to view both read and unread looks for the first security in sequential order from within the application.

8. The system of claim 7, wherein the software further causes the system to allow a user to view unviewed looks only in timestamp order starting from an oldest unread look.

9. The system of claim 7 wherein the software further causes the system to:
provide the user with a list of brokers logged into a trading floor communication system;
transmit a message from the user to the financial services provider for delivery to a broker selected from the list of brokers; and
receive a reply from the broker;
wherein received looks and the reply are stored in the same data format.

10. The system of claim 9, wherein the software allows the user to view both read and unread messages from the broker in sequential order.

11. The system of claim 9, wherein the software prevents a user from sending a message to a broker logged into the trading floor communication system and who has selected a do-not-disturb mode of operation.

12. The system of claim 7, wherein the software further causes the system to:
in response to receiving a request from the user for a most recent look for a second security during a trading day, sending the request to the financial services provider;
receiving a page of current look information for the second security; and
allowing the user to view from within the application both the received current look information for the second security and prior looks for the second security issued during the same trading day.
